# EUROPÄISCHE PATENTSCHRIFT

(11) **EP 3 416 876 B1**
(45) Veröffentlichungstag und Bekanntmachung des Hinweises auf die Patenterteilung: **18.11.2020**
(21) Anmeldenummer: 17704774.3
(22) Anmeldetag: 14.02.2017
(51) Int. Cl.: B62D 55/28

(54) **VERSCHLEISSPOLSTER FÜR EINE GLEISKETTE EINES KETTENFAHRZEUGS, GLEISKETTE UND BAUMASCHINE**
WEAR PAD FOR A TRACK OF A TRACKED VEHICLE, TRACK, AND CONSTRUCTION MACHINE
PLAQUE D'USURE CONÇUE POUR UNE CHENILLE D'UN VÉHICULE CHENILLÉ, CHENILLE ET ENGIN DE CHANTIER

(30) Priorität: 19.02.2016 DE 102016202626
(43) Veröffentlichungstag der Anmeldung: 26.12.2018
(73) Patentinhaber: Wirtgen GmbH, 53578 Windhagen (DE)
(72) Erfinder: DRUMM, Stephan, 53545 Ockenfels (DE); BUSLEY, Peter, 53545 Linz (Rhein) (DE); BARIMANI, Cyrus, 53639 Königswinter (DE); HÄHN, Günter, 53639 Königswinter (DE)
(74) Vertreter: dompatent von Kreisler Selting Werner - Partnerschaft von Patent- und Rechtsanwälten mbB
(86) Internationale Anmeldenummer: PCT/EP2017/053236
(87) Internationale Veröffentlichungsnummer: WO 2017/140652

(56) Entgegenhaltungen:
- EP-A1- 2 588 362
- EP-A2- 1 900 621
- JP-A- S58 101 880
- JP-U- H0 456 593
- US-A- 3 475 060
- US-A- 5 800 026

## Beschreibung

Die Erfindung betrifft ein auswechselbares Verschleißpolster für eine Gleiskette eines Kettenfahrzeugs, nach dem Oberbegriff des Anspruchs 1.

Aus dem Stand der Technik sind auswechselbare Verschleißpolster für Gleisketten bekannt, die an einer Zwischenplatte der Gleiskette lösbar befestigt werden können.

Die Verschleißpolster weisen in der Regel vier in Längsrichtung des Verschleißpolsters beabstandete nach außen vorstehende Schraubbolzen von Befestigungsschrauben auf. Die Befestigungsschrauben sind durch Verstärkungsschienen hindurchgeführt und in geeigneter Weise gegen Verdrehen gesichert.

Bei der Herstellung dieser Verschleißpolster werden die Verstärkungsschienen mit an ihren Enden angeordneten Befestigungsschrauben von dem Verschleißpolstermaterial umgossen.

Nachteilig ist dabei, dass sich das Verschleißpolstermaterial beim Umgießen auch unter die Verstärkungsschiene setzt. Dies hat den Nachteil, dass sich die Verschraubungen mit einer Zwischenplatte während des Betriebs aufgrund des weichen Polyurethanmaterials zwischen Verstärkungsschiene und Zwischenplatte wieder lösen, so dass die Schraubverbindungen regelmäßig nachgezogen werden müssen. Das zwischen der Verstärkungsschiene und der Zwischenplatte befindliche Polyurethanmaterial verhindert nämlich, dass die Vorspannung der Schraubenverbindung dauerhaft aufrechterhalten bleiben kann. Es versteht sich, dass bei bis zu 50 Verschleißpolstern je Gleiskette eines Fahrwerks und bei vier Fahrwerken je Maschine der zeitliche Aufwand für das Nachspannen der Schraubverbindungen erheblich ist, so dass erhöhte Kosten und ein erhöhter Zeitbedarf entsteht.

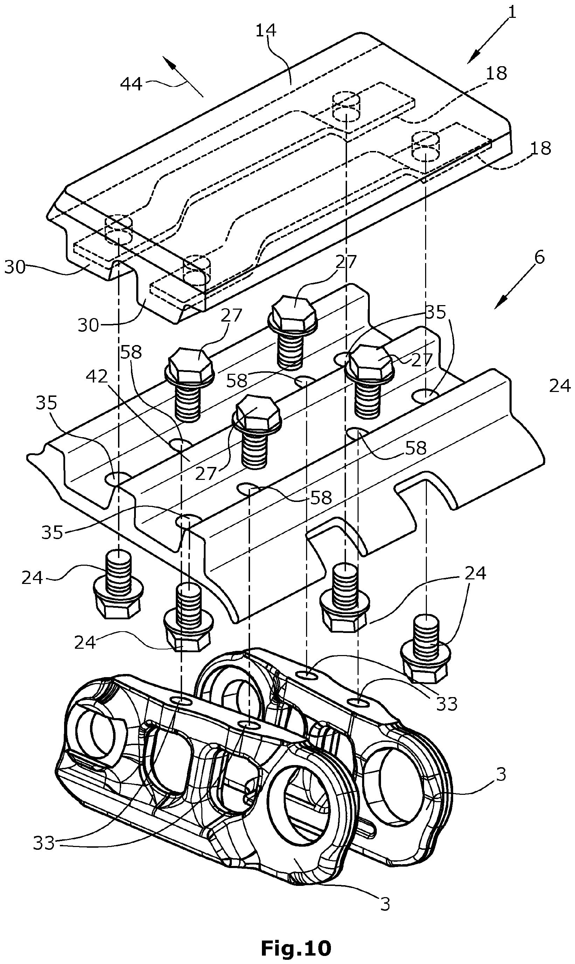

Aus der EP 1900621 ist bekannt, dass ein Anlagebund der Verstärkungsschiene im Wesentlichen bündig mit dem Verschleißpolstermaterial des Verschleißpolsters abschließt, so dass das Verschleißpolster über die Schraubverbindung an einer Zwischenplatte starr befestigt werden kann. Von der Unterseite des Verschleißpolsters stehen zwei sich in Längsrichtung des Verschleißpolsters erstreckende Vorsprünge ab, die in die Zwischenplatte, wie aus Fig. 10 ersichtlich, eingreifen. Insbesondere beim Lenken entstehen wechselnde Querkräfte, die auf die Befestigungsmittel einwirken und ebenfalls zu einem vorzeitigen Lockern der Befestigungsmittel zwischen der Zwischenplatte und der Gleiskette sowie zwischen dem Verschleißpolster und der Zwischenplatte führen können.

Auch eine Schräglage der Baumaschine erzeugt hohe Querkräfte, die von den Befestigungsmitteln des Verschleißpolsters und den Befestigungsmitteln der Zwischenplatte aufgenommen werden müssen.

Der Erfindung liegt daher die Aufgabe zugrunde, ein Verschleißpolster für eine Gleiskette der eingangs genannten Art, sowie eine Gleiskette und eine Baumaschine zu schaffen, mit denen die Haltbarkeit der Schraubverbindungen, eines Verschleißpolsters verbessert und die Herstellungskosten, und der Zeitaufwand für die Montage bzw. Demontage der Verschleißpolster und damit die Wartungskosten verringert werden können.

Diese Aufgabe wird durch die Merkmale von Anspruch 1 gelöst.

Die Erfindung sieht in vorteilhafter Weise vor, dass der Vorsprung des Verschleißpolsters auf der dem Gleiskettenglied zugewandten Unterseite für den zumindest teilweisen Eingriff in eine an den Vorsprung angepasste Vertiefung des Gleiskettengliedes eine Außenkontur aufweist, die zumindest teilweise unter einem zur Längsrichtung des Verschleißpolsters abweichenden Winkel verläuft.

Dadurch, dass der Vorsprung des Verschleißpolsters zumindest teilweise im Eingriff ist mit einer an dem Vorsprung angepassten Vertiefung des Gleiskettengliedes, können Querkräfte aufgenommen werden, die insbesondere beim Lenken des Kettenfahrzeugs in Längsrichtung des Verschleißpolsters wirken. Die Lenckräfte und/oder Schräglage der Gleiskette quer zur Bewegungsrichtung der Gleiskette bilden eine wechselnde Belastung auf die Befestigungsmittel, so dass sich die Schraubverbindung der Verschleißpolster unter der Einwirkung von wechselnden Querkräften lockern kann und ein Nachspannen der Schraubverbindungen erfordern kann. Die Außenkontur des an der Unterseite des Verschleißpolsters vorstehenden Vorsprungs, die zumindest teilweise unter einem zur Längsrichtung des Verschleißpolsters abweichenden Winkel verläuft, nimmt die Querkräfte auf und entlastet damit die Befestigungsmittel vollständig oder zumindest in wesentlichem Umfang von der Wechselbelastung. Auf diese Weise ist es möglich, nur noch zwei gegenseitig in Längsrichtung des Verschleißpolsters beabstandete Befestigungsmittel zu verwenden, so dass der Montageaufwand für Montage und Demontage des Verschleißpolsters verringert, quasi halbiert ist, und auch die Herstellkosten für das Verschleißpolster reduziert werden.

In besonders bevorzugter Ausführungsform ist der Winkel ≠ 0° und ≠ 90°. Vorzugsweise liegt der Winkel im Bereich von 20° bis 70° und besonders bevorzugt 30° bis 60°.

Der Vorsprung weist vorzugsweise zwei sich im Wesentlichen in Längsrichtung erstreckende Seitenflächen und zwei sich vorzugsweise im Wesentlichen senkrecht zur Längsrichtung erstreckende Stirnflächen auf. Die Seitenflächen des Vorsprungs weisen hierbei zur Aufnahme von Querkräften den erfindungsgemäßen Winkel zur Längsrichtung des Verschleißpolsters auf. Die Seitenflächen können in Längsrichtung einen konstanten Abstand aufweisen und insofern parallel zueinander verlaufen. Ebenso kann der Abstand zwischen den Seitenflächen in Längsrichtung variieren.

Ein weiterer Vorteil besteht darin, dass zwischen dem Gleiskettenglied und dem Verschleißpolster keine Zwischenplatte mehr benötigt wird. Es entfallen dadurch weitere Befestigungsmittel zwischen Gleiskette und Zwischenplatte, so dass der Montage- und Demontageaufwand insgesamt erheblich reduziert ist.

Besonders bevorzugt ist der Eingriff des Vorsprungs in eine zu dem Vorsprung komplementäre Vertiefung, die einen Formschluss zumindest in Längsrichtung des Verschleißpolsters bildet.

Vorzugsweise ist vorgesehen, dass das Verschleißpolster mindestens ein Verstärkungselement enthält, das zumindest überwiegend von Verschleißpolstermaterial umschlossen oder umgossen ist. Das Verstärkungselement erhöht die Steifigkeit, des Verschleißpolsters insbesondere in Form einer Verstärkungsschiene und ermöglicht eine starre Befestigung an den Gleiskettengliedern, ohne dass ein Nachspannen der Befestigungsmittel vor dem vollständigem Verschleiß der Lauffläche des Verschleißpolsters notwendig wird.

Das Verschleißpolster kann mindestens zwei in Längsrichtung des Verschleißpolsters mit Abstand voneinander angeordnete Befestigungsmittel aufweisen, die zur Befestigung des Verschleißpolsters an dem Gleiskettenglied dienen. Dabei sind die Befestigungsmittel vorzugsweise in der Nähe der in Längsrichtung freien Enden des Verschleißpolsters an der Unterseite angeordnet.

Vorzugsweise ist vorgesehen, dass das Verstärkungselement in den mindestens einen Vorsprung des Verschleißpolsters integriert ist. Auf diese Weise bildet der nicht den Vorsprung bildende Teil des Verschleißpolsters einen Verschleißbelag, der nahezu vollständig aufgebraucht werden kann.

Die Befestigungsmittel können in dem Verstärkungselement integriert sein und können auch einstückig mit dem Verstärkungselement sein. Derartige Befestigungsmittel ermöglichen eine sichere Befestigung des Verschleißpolsters über die gesamte Nutzungsdauer des Verschleißpolsters.

Bei einem bevorzugten Ausführungsbeispiel ist vorgesehen, dass das Verstärkungselement in Längsrichtung des Verschleißpolsters an mindestens zwei in Längsrichtung beabstandeten Stellen des im Vorsprung eingebetteten Verstärkungselementes im Wesentlichen bündig mit dem Verschleißpolstermaterial abschließt. Dadurch ist es möglich, dass beim Spannen der Befestigungsmittel das Verstärkungselement an den zwei beabstandeten Stellen in direktem Kontakt mit dem Gleiskettenglied stehen kann, so dass die Vorspannung der Schraubenverbindung dauerhaft aufrechterhalten bleibt und sich die Befestigungsmittel während der Nutzungsdauer nicht lockern.

Dabei ist vorzugsweise vorgesehen, dass die mindestens zwei im Wesentlichen bündig mit dem Verschleißpolstermaterial abschließenden Stellen des im Vorsprung eingebetteten Verstärkungselementes im Bereich der Befestigungsmittel des Verstärkungselementes angeordnet sind. Dies hat den Vorteil, dass die Vorspannung, die die Befestigungsmittel aufbringen, an den mit dem Gleiskettenglied in Kontakt stehenden Stellen des Verstärkungselementes am höchsten ist.

Bei einem besonders bevorzugten Ausführungsbeispiel ist vorgesehen, dass das sich längserstreckende Verschleißpolster ein Verhältnis von Länge zu Breite zwischen 2,5 und 5, vorzugsweise im Bereich zwischen 3,5 und 4, aufweist. Auf diese Weise können die Lücken zwischen zwei Verschleißpolstern der Gleiskette gering gehalten werden und gleichzeitig eine größere Standfläche für die Gleiskette erzielt werden.

Vorzugsweise ist vorgesehen, dass das Verschleißpolster zumindest an der Außenseite der Gleiskette quer zur Bewegungsrichtung gesehen gegenüber dem Gleiskettenglied übersteht. Auf diese Weise wird das Gleiskettenglied z. B. an Bordsteinkanten vor Beschädigung geschützt.

Bei einem bevorzugten Ausführungsbeispiel ist das Verhältnis der Breite quer zur Längsrichtung eines Verschleißpolsters zu dem Umlenkradius der Gleiskette im Bereich zwischen 0,2 und 0,4, vorzugsweise zwischen 0,25 und 0,3. Ein derartiges Verhältnis, auch Teilungsmaß genannt, hat den Vorteil, dass die Laufruhe der Gleiskette verbessert werden kann.

Bei einem Ausführungsbeispiel der Erfindung ist vorgesehen, dass die Vorsprünge des Verschleißpolsters bezogen auf die Längsrichtung des Verschleißpolsters nicht linear verlaufen, und zwar zumindest teilweise gebogen oder wellenförmig zur Längsrichtung des Verschleißpolsters verlaufen. Eine derartige Kontur der Vorsprünge ermöglicht einen Formschluss mit dem Gleiskettenglied, mit dem hohe Querkraftkomponenten aufgenommen werden können, die nicht ausschließlich quer zur Bewegungsrichtung des Verschleißpolsters auftreten.

Bei einem alternativen Ausführungsbeispiel kann vorgesehen sein, dass die Vorsprünge des Verschleißpolsters in Längsrichtung des Verschleißpolsters linear, und zwar zumindest teilweise schräg oder winkelförmig zur Längsrichtung des Verschleißpolsters verlaufen. Beispielsweise kann die Außenkontur des Vorsprungs in Längsrichtung in Draufsicht eine Zickzackform oder eine Sägezahnform aufweisen. Auch bei dieser Ausführungsform können von der Gleiskette ausgehende Querkraftkomponenten unterschiedlicher Richtungen aufgenommen werden und damit die Befestigungsmittel insbesondere von Querkräften vollständig oder zumindest in einem wesentlichen Umfang entlastet werden.

Desweiteren kann vorgesehen sein, dass die Vorsprünge des Verschleißpolsters in Längsrichtung des Verschleißpolsters eine unterschiedliche Breite aufweisen, oder in Längsrichtung an den Stirnseiten und/oder Außenkanten gestuft ausgebildet sind.

Besonders bevorzugt ist, dass das Material des Verschleißpolsters aus einem Elastomer, vorzugsweise einem Polyurethan, besteht, das vorzugsweise mit einer hellen Leuchtfarbe durchgefärbt ist. Aufgrund der Durchfärbung bleibt die helle Leuchtfarbe auch im Falle des Verschleißes des Verschleißpolsters erhalten.

Die Erfindung betrifft ferner eine Gleiskette für Kettenfahrzeuge mit mehreren Verschleißpolstern der vorbeschriebenen Art, sowie eine Baumaschinen mit einer derartigen Gleiskette.

Im Folgenden werden unter Bezugnahme auf die Zeichnungen Ausführungsbeispiele der Erfindung näher erläutert.

Es zeigen:
- Fig. 1: eine Explosionsdarstellung eines ersten Ausführungsbeispiels eines erfindungsgemäßen Verschleißpolsters und eines zugehörigen Gleiskettengliedes einer Gleiskette,
- Fig. 2: eine perspektivische Darstellung eines Gleiskettengliedes von der Innenseite mit einem erfindungsgemäße Verschleißpolster,
- Fig. 3: eine perspektivische Darstellung der Unterseite des ersten Ausführungsbeispiels eines Verschleißpolsters,
- Fig. 4: eine Draufsicht auf die Unterseite eines zweiten Ausführungsbeispiels,
- Fig. 5: eine Draufsicht auf die Unterseite eines dritten Ausführungsbeispiels,
- Fig. 6: einen Schnitt durch einen Vorsprung mit integriertem Verstärkungselement,
- Fig. 7: ein Ausführungsbeispiel für ein in dem Verstärkungselement aufgenommenes Befestigungsmittel,
- Fig. 8: eine vergrößerte Darstellung eines Details aus Fig. 6,
- Fig. 9: eine Gleiskette mit Verschleißpolstern in perspektivischer Ansicht, und
- Fig. 10: eine Explosionszeichnung eines Gleiskettengliedes mit Verschleißpolster und Zwischenplatte nach dem Stand der Technik.

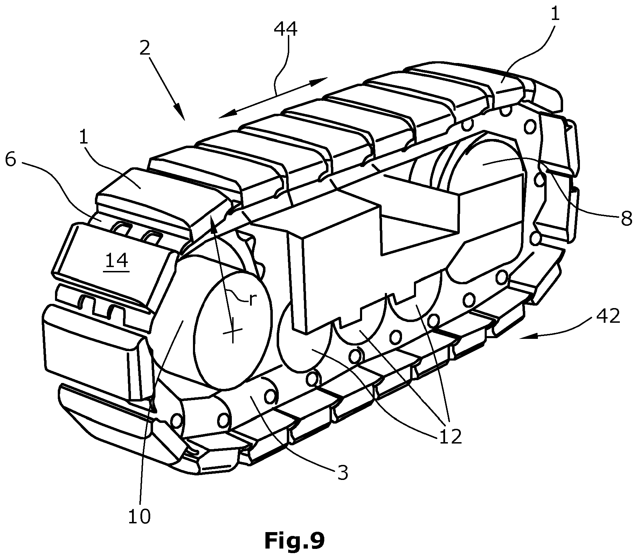

Fig. 9 zeigt ein Ausführungsbeispiel einer Gleiskette 2, die auf auswechselbaren Verschleißpolstern 1 abläuft. Derartige in Bewegungsrichtung 44 endlos umlaufende Gleisketten 2 werden in den Fahrwerken eines Kettenfahrzeugs, z. B. einer Straßenfräsmaschine, benötigt.

Die Gleiskette 2 läuft mit ihren Kettengliedern 3 bzw. Gleiskettengliedern 4 um zwei Umlenkrollen 8 und 10 um, von denen eine angetrieben ist. Der Umlenkradius r bemisst sich am Außenradius der Gleiskette 2, der in etwa der halben Höhe der Gleiskette 2 entspricht. Das Verhältnis der Breite des Verschleißpolsters 1 in Bewegungsrichtung 44 zu dem Umlenkradius r liegt im Bereich zwischen 0,2 und 0,4, vorzugsweise zwischen 0,25 und 0,3. Die Höhe der Gleiskette beträgt beispielsweise c.a 600 mm.

Ein solches Teilungsmaß verbessert die Laufruhe der Gleiskette 2. Dabei liegt das Verhältnis von Länge zu Breite des Verschleißpolsters 1 im Bereich zwischen 2,5 und 5, vorzugsweise im Bereich zwischen 3,5 und 4. Die Länge des Verschleißpolsters 1 beträgt beispielsweise ca. 300 mm, die Breite ca. 80 mm.

Im unteren Trum der Gleiskette 2 sind mehrere Stützrollen 12 angeordnet, die das Maschinengewicht tragen und auf den Kettengliedern 3 ablaufen.

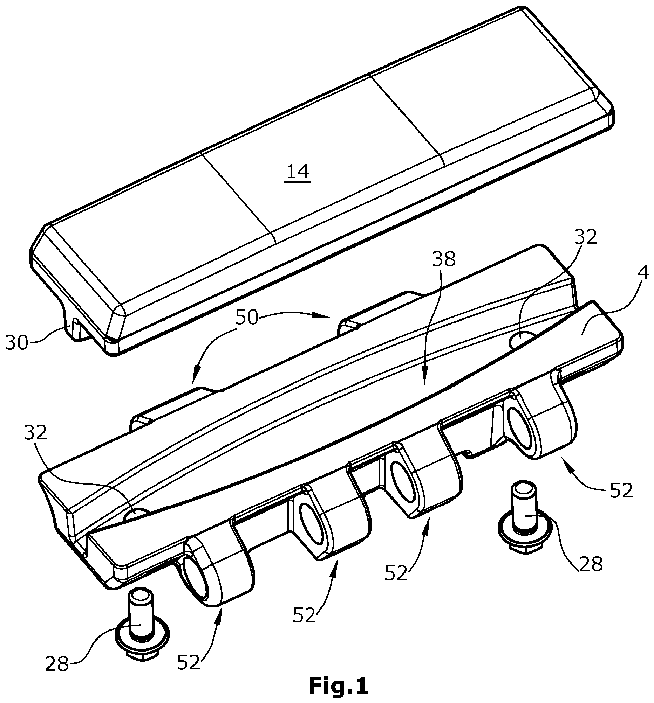

Die Fign. 1 bis 3 zeigen ein erstes erfindungsgemäßes Ausführungsbeispiel eines Gleiskettengliedes 4 mit einem unmittelbar ohne Zwischenplatte 6 auf das Gleiskettenglied 4 befestigten Verschleißpolster 1 in perspektivischer Ansicht. In dem Verschleißpolster 1 sind Befestigungsmittel 26 und hierzu koaxiale Befestigungslöcher 20 für Befestigungsschrauben 28 zum Befestigen des auswechselbaren Verschleißpolsters 1 auf dem dem Verschleißpolster 1 angepassten Gleiskettenglied 4 vorgesehen. Das Gleiskettenglied 4 weist hierzu koaxial zu den Befestigungslöchern 20 des Verschleißpolsters 1 angeordnete Durchgangslöcher 32 zur Aufnahme der Befestigungsschrauben 28 auf. Die Befestigungsmittel 26 sind dabei vorzugsweise in Längsrichtung des Verschleißpolsters 1 und vorzugsweise im Bereich der freien Enden angeordnet.

Die Gleiskettenglieder 4 benötigen im Unterschied zum Stand der Technik gemäß Fig. 10 keine Zwischenplatte 6 und sind gelenkig über Lageraugen 50, 52 untereinander verbunden, wobei die Lageraugen 50 in die Lageraugen 52 eines benachbarten Gleiskettengliedes 4 eingreifen und dort z. B. über einen nicht dargestellten Lagerbolzen gelenkig miteinander gekoppelt sind. Das Verschleißpolster 1 ist vorzugsweise nur mit zwei Befestigungsschrauben 28 an dem Gleiskettenglied 4 befestigt.

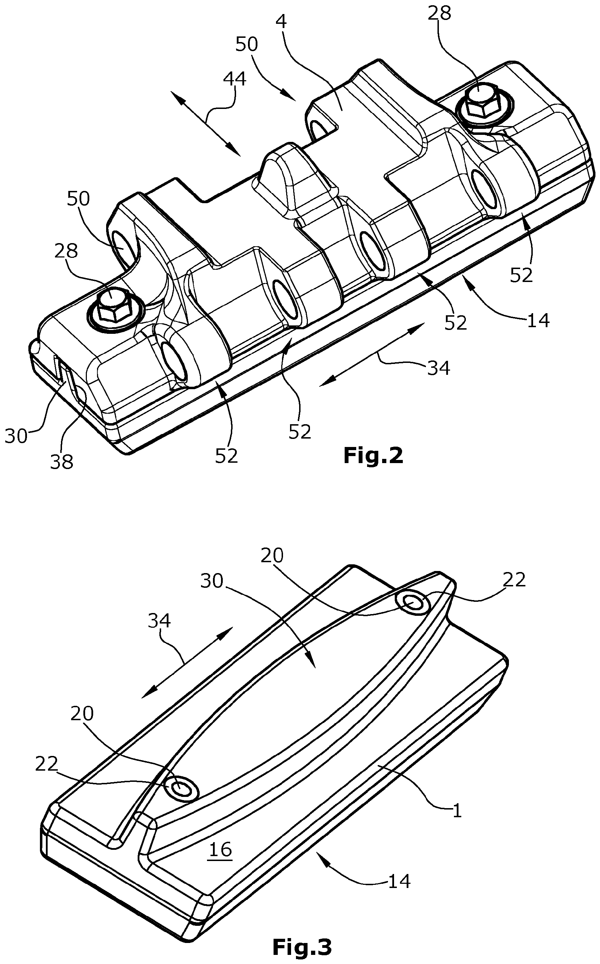

Das Ausführungsbeispiel der Fign. 1 und 3 zeigt ein Verschleißpolster 1 mit einem Vorsprung 30 mit in Draufsicht gebogener Außenkontur, die auch im Wesentlichen elliptisch ausgeführt sein kann.

Die Verschleißpolster 1 aller Ausführungsbeispiele bestehen vorzugsweise aus einem ggf. verstärkten Verschleißpolstermaterial 36, vorzugsweise einem Elastomermaterial, z. B. Polyurethan, das nach einem besonders bevorzugten Ausführungsbeispiel mit einer hellen Leuchtfarbe, vorzugsweise signalgelb (RAL 1003) durchgefärbt ist.

Es versteht sich auch, dass der Vorsprung 30 entgegen Fig. 2 nicht bündig mit den Stirnkanten des Verschleißpolsters 1 in Längsrichtung 34 enden muss, sondern auch kurz hinter den Befestigungslöchern 20 enden kann.

Das Verschleißpolster 1 kann vorzugsweise eingegossene Verstärkungselemente 18 aufweisen, die bevorzugt in Längsrichtung 34 des Verschleißpolsters 1 verlaufen. In dem ersten Ausführungsbeispiel ist lediglich ein Verstärkungselement 18 in dem Verschleißpolster 1 angeordnet. In der Nähe der freien Enden eines Verstärkungselementes 18 können Befestigungsmittel 26 verankert sein, die durch die Durchgangsbohrungen 20 des Verstärkungselementes 18 hindurch mit Befestigungsschrauben 28 zusammenwirken. Es versteht sich, dass die Befestigungsmittel 26 alternativ auch aus gegenüber dem Verschleißpolster 1 vorstehenden Schraubbolzen bestehen können, die auf der Innenseite eines Gleiskettengliedes 4 mit einer Mutter verschraubt werden.

Die Verschleißpolster 1 haben auf ihrer Außenseite eine Lauffläche 14 , sowie eine dem Gleiskettenglied 4 zugewandte Unterseite 16, die im Wesentlichen parallel zur Lauffläche 14 verläuft.

Die Befestigungsmittel 26 sind geeignet, von der Unterseite 16 des Verschleißpolsters 1 her einschraubbare Befestigungsschrauben 28 aufzunehmen. Hierzu weisen die Gleiskettenglieder 4 geeignete Durchgangsbohrungen 32 auf, die koaxial zu den Befestigungslöchern 20 und den Befestigungsmitteln 26 des Verschleißpolsters 1 verlaufen. Wesentlich ist dabei, dass zumindest ein Teil 22 des Verstärkungselementes 18 im montierten Zustand der Verschleißpolster 1 auf dem Gleiskettenglied 4 unmittelbar aufliegt oder bündig mit dem Verschleißpolstermaterial 36 abschließt.

Das Verstärkungselement 18 in dem Verschleißpolster 1 , z. B. in Form einer Verstärkungsschiene, verläuft in dem ersten und allen weiteren Ausführungsbeispielen in mindestens einem an der Unterseite 16 des Verschleißpolsters 1 von der Unterseite 16 abstehenden Vorsprung 30.

Dabei ist das Verstärkungselement 18 vorzugsweise nur in dem sich längserstreckenden Vorsprung 30 vorgesehen und kann dessen Kontur folgen, in dem Sinne, dass das Verstärkungselement 18 der Außenkontur des Vorsprungs 30 in Längsrichtung 34 im Wesentlichen angepasst ist. Sofern möglich, wie beispielsweise bei dem Ausführungsbeispiel der Fign. 1 bis 3, sowie 6, kann das Verstärkungselement 18 auch im Wesentlichen in Längsrichtung 34 geradlinig verlaufen. Das Verstärkungselement 18 kann auch selbst einen Teil des Vorsprungs 30 bilden.

Es versteht sich, dass der Vorsprung 30 z. B. auch in Längsrichtung 34 in zwei oder mehr Vorsprünge 30 aufgeteilt sein kann, oder dass zwei Vorsprünge 30 im Wesentlichen parallel zueinander an der Unterseite 16 des Verschleißpolsters 1 verlaufen.

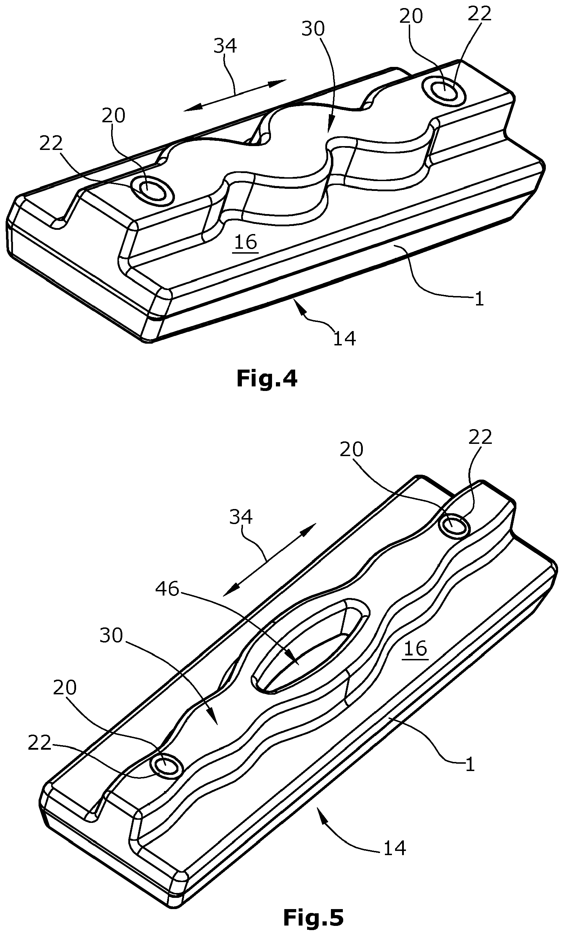

Fig. 4 zeigt eine perspektivische Ansicht eines Verschleißpolsters 1 mit einem in der Draufsicht wellenförmigen Vorsprung 30, der von der Unterseite 16 des Verschleißpolsters absteht. Die Unterseite 16 liegt auf dem Gleiskettenglied 4 auf, wobei der Vorsprung 30 in eine entsprechende Vertiefung 38 des Gleiskettengliedes 4 eingreift.

Die jeweilige Vertiefung 38 des Gleiskettengliedes 4 ist der jeweiligen Kontur und Form der Vorsprünge 30, wie sie aus den Fign. 1 bis 5 ersichtlich sind, angepasst.

Es versteht sich, dass der Vorsprung 30 zumindest teilweise in Eingriff mit der Vertiefung 38, in der Art ist, dass zumindest in Längsrichtung 34 des Verschleißpolsters 1 ein Formschluss besteht. Dies erfordert nicht, dass der Vorsprung 30 vollständig mit der Kontur der Vertiefung 38 übereinstimmt. Vorzugsweise ist jedoch der Vorsprung 30 komplementär zu der Vertiefung 38 des Gleiskettengliedes 4 ausgebildet.

Bei dem Ausführungsbeispiel der Fig. 5 kann auch ein von dem Gleiskettenglied 4 abstehender Vorsprung in eine Aussparung 46 des Vorsprungs 30 gemäß Fig. 5 eingreifen.

Es versteht sich dabei, dass das Verstärkungselement 18 der Fig. 5 ebenfalls eine der Aussparung 46 entsprechende Aussparung aufweisen kann, in die der vorzugsweise komplementäre Vorsprung des Gleiskettengliedes 4 ggf. mit ausschließlich metallischem Kontakt eingreifen kann.

Die Befestigungslöcher 20 des Verschleißpolsters 1 sind koaxial zu den Durchgangsbohrungen 32 des Gleiskettengliedes.

Das Verstärkungselement 18 schließt in Längsrichtung 34 des Verschleißpolsters an mindestens zwei in Längsrichtung 34 beabstandeten Stellen im Wesentlichen bündig mit dem Verschleißpolstermaterial 36 ab. Vorzugsweise ist der Teil 22 des Verstärkungselementes 18, der im Wesentlichen bündig mit dem Verschleißpolstermaterial 36 abschließt, koaxial zu dem Befestigungsloch 20 des Verschleißpolsters 1.

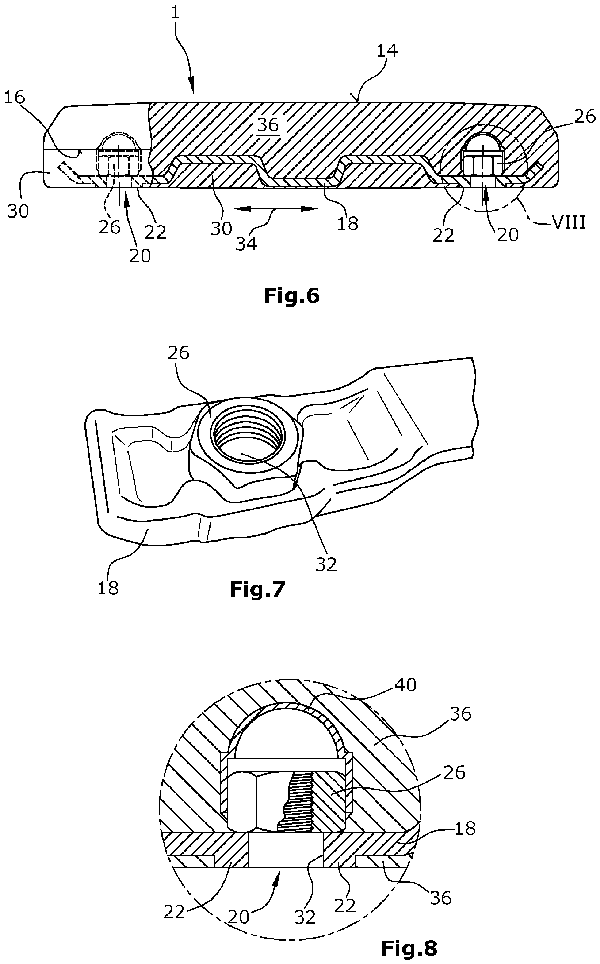

Fig. 6 zeigt einen Längsschnitt in Längsrichtung 34 durch das Verschleißpolster und das in den Vorsprung 30 integrierte Verstärkungselement 18.

Fig. 7 zeigt ein mögliches Ausführungsbeispiel einer Verdrehsicherung für das Befestigungsmittel 26, das in dem Verstärkungselement 18 versenkt aufgenommen sein kann.

Das Befestigungsmittel 26 kann auch einstückig mit dem Verstärkungselement 18 sein, oder an diesem z. B. durch eine nicht lösbare Verbindung befestigt sein.

Vorzugsweise sitzt auf dem Befestigungsmittel 26 eine Schutzkappe 40 , die einerseits beim Vergießen des Verstärkungselementes mit dem Verschleißpolstermaterial 36 einen Freiraum für das freie Ende der Befestigungsschraube 28 schafft und verhindert, dass Verschleißpolstermaterial 36 in das Gewinde des Befestigungsmittels 26 eindringen kann. Alternativ kann das Befestigungsmittel 26 auch aus einer Hutmutter oder einer Nietmutter bestehen.

Bei diesem Ausführungsbeispiel ist der mit dem Gleiskettenglied 4 in Kontakt befindliche Teil 22 des Verstärkungselementes 18 als zu dem Befestigungsloch 20 koaxialer Ringbund ausgeführt.

Es ist allerdings nicht zwingend erforderlich, dass der Teil 22 des Verstärkungselementes das Befestigungsloch 20 vollständig umgibt.

Die auswechselbaren Verschleißpolster 1 nach dem Stand der Technik sind, wie aus Fig. 10 ersichtlich, über eine Zwischenplatte 6 auf gelenkig miteinander gekoppelten Kettengliedern 3 der endlos umlaufenden Gleiskette 2 lösbar befestigt.

Fig. 10 zeigt ein Verschleißpolster 1 nach dem Stand der Technik in perspektivischer Ansicht mit der darunter liegenden Zwischenplatte 6, die ihrerseits an den Kettengliedern 3 befestigt ist. Insgesamt vier Befestigungsschrauben 24 dienen zur Befestigung des Verschleißpolsters 1 auf der Zwischenplatte 6 und weitere vier Befestigungsschrauben 27 sind durch Durchgangslöcher 35 der Zwischenplatte 6 und Durchgangslöcher 33 hindurch mit zwei parallel zueinander umlaufenden Kettengliedern 3 verschraubt.

Sämtliche bei dem Stand der Technik auftretenden Querkräfte werden von den insgesamt 8 Befestigungsschrauben 24, 27 aufgefangen und belasten dementsprechend die Schraubverbindungen.

Die Ausführungsbeispiele der Fign. 1 bis 8 benötigen dagegen keine Zwischenplatte 6 und können mit lediglich zwei Befestigungsschrauben 28 derart befestigt werden, dass die Schraubverbindungen von Querkräften weitestgehend entlastet sind.

Die Gleiskette 2 der Ausführungsbeispiele der Fign. 1 bis 8 entspricht der Darstellung der Fig. 9 mit der Ausnahme, dass die Zwischenplatte 6 und die Kettenglieder 3 durch Gleiskettenglieder 4 ersetzt sind.

## Patentansprüche

1. Verschleißpolster für eine Gleiskette (2) eines Kettenfahrzeugs, wobei
- das Verschleißpolster (1) eine äußere Lauffläche (14) und eine der Lauffläche (14) gegenüberliegende Unterseite (16) aufweist, von der mindestens ein Vorsprung (30) absteht,
- das Verschleißpolster (1) Befestigungsmittel (26) zur Befestigung an der Gleiskette (2) aufweist,
- das Verschleißpolstermaterial (36) des Verschleißpolsters (1) aus einem Elastomer, vorzugsweise einem Polyurethan, besteht,
- das Verschleißpolster (1) mindestens ein Verstärkungselement (18) enthält, das zumindest überwiegend von Verschleißpolstermaterial (36) umschlossen oder umgossen ist
**dadurch gekennzeichnet,**
**dass** der Vorsprung des Verschleißpolsters (1) auf der einem Gleiskettenglied (4) der Gleiskette (2) zugewandten Unterseite (16) für den zumindest teilweisen Eingriff in eine an den Vorsprung angepasste Vertiefung des Gleiskettengliedes (4) eine Kontur aufweist, die zumindest teilweise unter einem zur Längsrichtung (34) des Verschleißpolsters (1) abweichenden Winkel verläuft.

2. Verschleißpolster nach Anspruch 1, **dadurch gekennzeichnet, dass** das Verschleißpolster (1) mindestens zwei in Längsrichtung des Verschleißpolsters (1) mit Abstand voneinander angeordnete Befestigungsmittel (26) aufweist.

3. Verschleißpolster nach Anspruch 1 oder 2, **dadurch gekennzeichnet, dass** das Verstärkungselement (18) wenigstens teilweise in den mindestens einen Vorsprung (30) des Verschleißpolsters (1) integriert ist.

4. Verschleißpolster nach einem der Ansprüche 1 bis 3, **dadurch gekennzeichnet, dass** die Befestigungsmittel (26) in das Verstärkungselement (18) integriert sind und vorzugsweise einstückig mit dem Verstärkungselement (18) sind.

5. Verschleißpolster nach einem der Ansprüche 1 bis 4, **dadurch gekennzeichnet, dass** das Verstärkungselement (18) in Längsrichtung (34) des Verschleißpolsters (1) an mindestens zwei in Längsrichtung (34) beabstandeten Stellen des ansonsten im Vorsprung (30) eingebetteten Verstärkungselementes (18) im Wesentlichen bündig mit dem Verschleißpolstermaterial (36) abschließt.

6. Verschleißpolster nach einem der Ansprüche 4 oder 5, **dadurch gekennzeichnet, dass** die mindestens zwei im Wesentlichen bündig mit dem Verschleißpolstermaterial (36) abschließenden Stellen des im Vorsprung (30) eingebetteten Verstärkungselementes (18) im Bereich der Befestigungsmittel (22) des Verstärkungselementes (18) angeordnet sind.

7. Verschleißpolster nach einem der Ansprüche 1 bis 6, **dadurch gekennzeichnet, dass** das sich längs erstreckende Verschleißpolster (1) ein Verhältnis von Länge zu Breite im Bereich zwischen 2,5 und 5,0, vorzugsweise im Bereich zwischen 3,5 und 4,0 aufweist.

8. Verschleißpolster nach einem der Ansprüche 1 bis 7, **dadurch gekennzeichnet, dass** das Verschleißpolster (1) zumindest an der Außenseite (42) der Gleiskette (2) quer zur Bewegungsrichtung (44) gesehen gegenüber der Gleiskette (2) übersteht.

9. Verschleißpolster nach einem der Ansprüche 1 bis 8, **dadurch gekennzeichnet, dass** das Verhältnis der Breite quer zur Längsrichtung (34) eines Verschleißpolsters (1) zu dem Umlenkradius (r) der Gleiskette (2) im Bereich zwischen 0,2 und 0,4, vorzugsweise zwischen 0,25 und 3, liegt.

10. Verschleißpolster nach einem der Ansprüche 1 bis 9, **dadurch gekennzeichnet, dass** der mindestens eine Vorsprung (30) des Verschleißpolsters (1) in Längsrichtung (34) des Verschleißpolsters (1) zumindest teilweise nichtlinear, insbesondere teilweise gebogen oder wellenförmig zur Längsrichtung des Verschleißpolsters (1) verläuft.

11. Verschleißpolster nach einem der Ansprüche 1 bis 9, **dadurch gekennzeichnet, dass** der mindestens eine Vorsprung (30) des Verschleißpolsters (1) in Längsrichtung (34) des Verschleißpolsters (1) zumindest teilweise linear, insbesondere teilweise schräg, oder winkelförmig zur Längsrichtung (34) des Verschleißpolsters (1) verläuft.

12. Verschleißpolster nach einem der Ansprüche 1 bis 11, **dadurch gekennzeichnet, dass** der mindestens eine Vorsprung (30) des Verschleißpolsters (1) in Längsrichtung (34) des Verschleißpolsters (1) eine unterschiedliche Breite aufweist oder im Querschnitt gestuft ausgebildet sind.

13. Verschleißpolster nach einem der Ansprüche 1 bis 12, **dadurch gekennzeichnet, dass** das Verschleißpolstermaterial mit einer hellen Leuchtfarbe durchgefärbt ist.

14. Gleiskette (2) für Kettenfahrzeuge, insbesondere für Fräsmaschinen, mit mehreren in Bewegungsrichtung endlos umlaufenden, gelenkig miteinander gekoppelten Gleiskettenglieder (4), auf deren Außenseite jeweils mindestens ein Verschleißpolster (1) nach einem der Ansprüche 1 bis 13 befestigt sind.

15. Baumaschine, insbesondere Fräsmaschine, mit wenigstens einer Gleiskette (2) nach Anspruch 14.

## Claims

1. Wear pad for a crawler track (2) of a tracked vehicle, wherein
- the wear pad (1) comprises an outer tread surface (14), and a bottom side (16) opposite the tread surface (14) from which at least one protrusion (30) protrudes,
- the wear pad (1) comprises fastening means (26) for fastening to the crawler track (2),
- the wear pad material (36) of the wear pad (1) is made of an elastomer, preferably a polyurethane,
- the wear pad (1) includes, as a minimum, one reinforcing element (18), at least the major part of which is enclosed or cast in by wear pad material (36),
**characterized in that**
the protrusion of the wear pad (1) comprises, on the bottom side (16) facing a crawler track link (4) of the crawler track (2), for the at least partial engagement with an indentation of the crawler track link (4) adapted to the protrusion, a contour which extends, at least partially, at an angle deviating from the longitudinal direction (34) of the wear pad (1).

2. Wear pad in accordance with claim 1, **characterized in that** the wear pad (1) comprises at least two fastening means (26) arranged at a distance to one another in the longitudinal direction of the wear pad (1).

3. Wear pad in accordance with claim 1 or 2, **characterized in that** the reinforcing element (18) is, at least partially, integrated in the at least one protrusion (30) of the wear pad (1).

4. Wear pad in accordance with one of the claims 1 to 3, **characterized in that** the fastening means (26) are integrated in the reinforcing element (18), and are preferably of integral design with the reinforcing element (18).

5. Wear pad in accordance with one of the claims 1 to 4, **characterized in that**, in the longitudinal direction (34) of the wear pad (1), the reinforcing element (18) terminates essentially flush with the wear pad material (36) in at least two points, spaced in the longitudinal direction (34), of the reinforcing element (18) otherwise embedded in the protrusion (30).

6. Wear pad in accordance with one of the claims 4 or 5, **characterized in that** the at least two points of the reinforcing element (18) embedded in the protrusion (30) that terminate essentially flush with the wear pad material (36) are arranged in the area of the fastening means (22) of the reinforcing element (18).

7. Wear pad in accordance with one of the claims 1 to 6, **characterized in that** the longitudinally extending wear pad (1) comprises a length-to-width ratio in the range between 2.5 and 5.0, preferably in the range between 3.5 and 4.0.

8. Wear pad in accordance with one of the claims 1 to 7, **characterized in that** the wear pad (1) protrudes vis-à-vis the crawler track (2) at least on the outer side (42) of the crawler track (2) as seen transverse to the direction of movement (44).

9. Wear pad in accordance with one of the claims 1 to 8, **characterized in that** the ratio of the width transverse to the longitudinal direction (34) of a wear pad (1) to the return radius (r) of the crawler track (2) is in the range between 0.2 and 0.4, preferably between 0.25 and 3.

10. Wear pad in accordance with one of the claims 1 to 9, **characterized in that** the at least one protrusion (30) of the wear pad (1) extends, at least in part, non-linearly in the longitudinal direction (34) of the wear pad (1), in particular, in part, in a curved or undulating fashion relative to the longitudinal direction of the wear pad (1).

11. Wear pad in accordance with one of the claims 1 to 9, **characterized in that** the at least one protrusion (30) of the wear pad (1) extends, at least in part, linearly in the longitudinal direction (34) of the wear pad (1), in particular, in part, in an oblique or angular fashion relative to the longitudinal direction (34) of the wear pad (1).

12. Wear pad in accordance with one of the claims 1 to 11, **characterized in that** the at least one protrusion (30) of the wear pad (1) exhibits a different width in the longitudinal direction (34) of the wear pad (1) or is of stepped design in the cross section.

13. Wear pad in accordance with one of the claims 1 to 12, **characterized in that** the wear pad material is through-coloured in a bright fluorescent colour.

14. Crawler track (2) for tracked vehicles, in particular for milling machines, comprising multiple crawler track links (4) continuously revolving in the direction of movement, coupled to one another in an articulated fashion, on the outer side of which at least one wear pad (1) each in accordance with one of the claims 1 to 13 is fastened.

15. Construction machine, in particular milling machine, comprising at least one crawler track (2) in accordance with claim 14.

## Revendications

1. Plaque d'usure pour une chenille (2) d'un véhicule à chenilles, dans laquelle
- la plaque d'usure (1) comporte une surface de roulement extérieure (14) et une face inférieure (16), opposée à la surface de roulement (14), d'où dépasse au moins une saillie (30),
- la plaque d'usure (1) comporte des moyens de fixation (26) pour la fixation à la chenille (2),
- le matériau de plaque d'usure (36) de la plaque d'usure (1) est constitué d'un élastomère, de préférence un polyuréthane,
- la plaque d'usure (1) contient au moins un élément de renforcement (18), lequel est au moins principalement entouré ou enrobé par le matériau de plaque d'usure (36)
**caractérisée en ce que** la saillie de la plaque d'usure (1) comporte sur la face inférieure (16) tournée vers un maillon de chenille (4) de la chenille (2) un contour pour entrer en prise au moins partiellement sur une dépression du maillon de chenille (4) adaptée à la saillie, lequel s'étend au moins en partie à un angle déviant par rapport à la direction longitudinale (34) de la plaque d'usure (1).

2. Plaque d'usure selon la revendication 1, **caractérisée en ce que** la plaque d'usure (1) comporte au moins deux moyens de fixation (26) disposés dans la direction longitudinale de la plaque d'usure (1) avec un écart l'un par rapport à l'autre.

3. Plaque d'usure selon la revendication 1 ou 2, **caractérisée en ce que** l'élément de renforcement (18) est intégré au moins en partie dans l'au moins une saillie (30) de la plaque d'usure (1).

4. Plaque d'usure selon l'une des revendications 1 à 3, **caractérisée en ce que** les moyens de fixation (26) sont intégrés dans l'élément de renforcement (18) et sont de préférence d'une pièce avec l'élément de renforcement (18) .

5. Plaque d'usure selon l'une des revendications 1 à 4, **caractérisée en ce que** l'élément de renforcement (18) rejoint, dans la direction longitudinale (34) de la plaque d'usure (1), sensiblement en affleurement le matériau de plaque d'usure (36) à au moins deux endroits, écartés l'un de l'autre dans la direction longitudinale (34), de l'élément de renforcement (18) autrement incorporé dans la saillie (30).

6. Plaque d'usure selon l'une des revendications 4 ou 5, **caractérisée en ce que** les au moins deux endroits de l'élément de renforcement (18) incorporé dans la saillie (30) rejoignant sensiblement en affleurement le matériau de plaque d'usure (36) sont disposés dans la zone des moyens de fixation (22) de l'élément de renforcement (18).

7. Plaque d'usure selon l'une des revendications 1 à 6, **caractérisée en ce que** la plaque d'usure (1) s'étendant longitudinalement présente une proportion de la longueur à la largeur dans un intervalle entre 2,5 et 5,0, de préférence dans un intervalle entre 3,5 et 4,0.

8. Plaque d'usure selon l'une des revendications 1 à 7, **caractérisée en ce que** la plaque d'usure (1) est en porte-à-faux par rapport à la chenille (2) au moins sur la face extérieure (42) de la chenille (2), en vue transversale par rapport à la direction de déplacement (44) .

9. Plaque d'usure selon l'une des revendications 1 à 8, **caractérisée en ce que** la proportion de la largeur transversalement à la direction longitudinale (34) d'une plaque d'usure (1) au rayon de déviation (r) de la chenille (2) se trouve dans un intervalle entre 0,2 et 0,4, de préférence entre 0,25 et 3.

10. Plaque d'usure selon l'une des revendications 1 à 9, **caractérisée en ce que** l'au moins une saillie (30) de la plaque d'usure (1) s'étend de manière au moins partiellement non linéaire dans la direction longitudinale (34) de la plaque d'usure (1), en particulier partiellement incurvée ou ondulée par rapport à la direction longitudinale (34) de la plaque d'usure (1) .

11. Plaque d'usure selon l'une des revendications 1 à 9, **caractérisée en ce que** l'au moins une saillie (30) de la plaque d'usure (1) s'étend de manière au moins partiellement linéaire dans la direction longitudinale (34) de la plaque d'usure (1), en particulier partiellement oblique ou coudée par rapport à la direction (34) longitudinale (34) de la plaque d'usure (1) .

12. Plaque d'usure selon l'une des revendications 1 à 11, **caractérisée en ce que** l'au moins une saillie (30) de la plaque d'usure (1) présente une largeur différente dans la direction longitudinale (34) de la plaque d'usure (1) et est réalisée comme étagée dans sa section transversale.

13. Plaque d'usure selon l'une des revendications 1 à 12, **caractérisée en ce que** le matériau de plaque d'usure est teinté dans la masse avec une couleur lumineuse claire.

14. Chenille (2) pour véhicules à chenilles, en particulier pour fraiseuses routières, dotée de plusieurs maillons de chenille (4) couplés l'un à l'autre de manière articulée et circulant sans fin dans la direction de déplacement, une plaque d'usure (1) selon l'une des revendications 1 à 13 étant respectivement fixée sur la face extérieure de chacun d'eux.

15. Engin de chantier, en particulier fraiseuse routière, doté d'au moins une chenille (2) selon la revendication 14.
